Europäisches Patentamt

European Patent Office

Office européen des brevets

(19)

(11) Veröffentlichungsnummer : **0 406 549 B1**

## (12) EUROPÄISCHE PATENTSCHRIFT

(45) Veröffentlichungstag der Patentschrift :
**11.08.93 Patentblatt 93/32**

(51) Int. Cl.⁵ : **C04B 35/02, C04B 41/45**

(21) Anmeldenummer : **90109514.1**

(22) Anmeldetag : **19.05.90**

(54) **Verfahren zur Herstellung von feuerfesten, kohlenstoffgebundenen keramischen Formkörpern.**

(30) Priorität : **02.06.89 DE 3917965**

(43) Veröffentlichungstag der Anmeldung :
**09.01.91 Patentblatt 91/02**

(45) Bekanntmachung des Hinweises auf die
Patenterteilung :
**11.08.93 Patentblatt 93/32**

(84) Benannte Vertragsstaaten :
**AT BE DE ES FR GB GR IT LU NL SE**

(56) Entgegenhaltungen :
**EP-A- 0 100 306**
**EP-A- 0 242 849**
**EP-A- 0 313 737**
**DE-A- 3 814 360**
**FR-A- 1 260 310**
**US-A- 4 071 593**
**DERWENT PUBLICATIONS, LTD., LONDON,**
**GB; DATABASE WPIL , ACCESSION NO.**
**85-267381, DW8543; & JP-A-60180950 (HA-**
**RIMA TAIKA RENGA) 14.09.1985**
**DERWENT PUBLICATIONS, LTD., LONDON,**
**GB; DATABASE WPI, ACCESSION NO. 80-**
**24992C, DW8014; & SU-A-678042 (EAST RE-**
**FRACT IND) 05.08.1979**

(56) Entgegenhaltungen :
**DERWENT PUBLICATIONS, LTD., LONDON,**
**GB; DATABASE WPIL , ACCESSION NO.**
**88-159679, DW8823; & SU-A-1350159 (UKR RE-**
**FRACTORY RES) 07.11.1987**
**DERWENT PUBLICATIONS, LTD., LONDON,**
**GB; DATABASE WPIL , ACCESSION NO. 82-**
**75633E, DW8236; & JP-A-57123872 (NIPPON**
**STEEL CORP) 02.08.1982**

(73) Patentinhaber : **RADEX-HERAKLITH**
**INDUSTRIEBETEILIGUNGS**
**AKTIENGESELLSCHAFT**
**Opernring 1**
**A-1010 Wien (AT)**

(72) Erfinder : **Dötsch, Lorenz**
**Auf der Dreisprit 12**
**W-5414 Vallendar (DE)**
Erfinder : **Batton, Andreas, Dr. Ing.**
**Pf. Robens-Strasse 20**
**W-5227 Windeck (DE)**
Erfinder : **Schüller, Helmut, Dipl.-Ing.**
**Am Berghang 7**
**W-5330 Königswinter (DE)**
Erfinder : **Decker, Jens**
**Lindenstrasse 34**
**W-5410 Höhr-Grenzhausen (DE)**

(74) Vertreter : **Becker, Thomas, Dr., Dipl.-Ing. et al**
**Patentanwälte Becker & Müller**
**Eisenhüttenstrasse 2**
**W-4030 Ratingen 1 (DE)**

EP 0 406 549 B1

**Beschreibung**

Die Erfindung betrifft ein Verfahren zur Herstellung von feuerfesten, kohlenstoffgebundenen keramischen Formkörpern, die zum Beispiel als Ausmauerungssteine, Schieberplatten für Schieberverschlüsse oder Ausgüsse in metallurgischen Schmelzgefäßen Verwendung finden.

Aus der US-A-4,071,593 ist ein Verfahren zur Herstellung eines mit Teer imprägnierten feuerfesten Artikels bekannt, bei dem eine Grobfraktion des feuerfesten Werkstoffs mit einem organischen Polymer beschichtet und die feuerfeste Feinfraktion zugemischt wird.

Auch die DE-A-38 14 360 A1 beschreibt eine übliche Mischtechnik bei der Herstellung kunstharzgebundener, kohlenstoffhaltigen feuerfesten Erzeugnisse.

Aus der EP-A-0 100 306 A3 ist ein Verfahren zur Herstellung von feuerfesten, kohlenstoffhaltigen, nicht basischen und nicht isolierenden Steinen und Massen bekannt, bei dem die einzelnen Komponenten (feuerfestes Matrixmaterial, kohlenstoffhaltiges Material, Bindemittel) ebenfalls mechanisch vermischt werden.

Bekannte, kohlenstoffhaltige feuerfeste Werkstoffe bestehen, wie sich der EP-A-242 849 und der DE-C-37 36 680 entnehmen läßt, aus einer Mischung feuerfester Teilchen wie Aluminiumoxid, Zirkondioxid, Tonen, Siliciumcarbid, Siliciumdioxid oder dergleichen und Kohlenstoff in Form von Flockengraphit, amorphem Graphit, Koks oder dergleichen. Daneben finden auch kohlenstoffhaltige organische Binder wie verschiedene Harze Verwendung.

Die Produkte weisen eine gute Temperatur-Schockbeständigkeit auf und zeigen zum Teil eine günstige Resistenz gegenüber einem Schlackenangriff.

Nachteilig ist jedoch, daß die Harzkomponente meist nur inhomogen im feuerfesten Matrixmaterial verteilt werden kann, insbesondere wenn größere Mengen an Graphit oder Ruß eingesetzt werden. Daraus resultiert neben einem ungünstigen Raumgewicht vor allem eine Preßlagenbildung bei der Herstellung.

Der Erfindung liegt die Aufgabe zugrunde, ein Verfahren anzubieten, mit dem feuerfeste, kohlenstoffgebundene keramische Formkörper mit verbesserten Eigenschaften hergestellt werden können. Dabei sollen insbesondere die Verarbeitbarkeit sowie Korrosions- und Erosionsbeständigkeit verbessert werden.

Ausgehend von der Überlegung, daß dieses Ziel vor allem durch ein homogenes, feinteiliges Gefüge erreicht werden kann, liegt der Erfindung die Erkenntnis zugrunde, die verschiedenen Mischungsbestandteile granulatartig aufzubereiten und dabei Feinfraktionen durch Aufsprühen oder Aufstreuen auf Grobfraktionen aufzubringen. Auf diese Weise wird eine Art "Panierung" einzelner Granalien erreicht, die sich anschließend sowohl positiv bei der Verpressung auswirkt, als auch erhöhte Oberflächenreaktionen zwischen den einzelnen Komponenten ermöglicht und damit zu homogenen, dichten Körpern mit günstigen Verschleißeigenschaften führt.

Durch die Beschichtung (Benetzung) der Grobfraktion mit den verschiedenen Komponenten der Feinfraktion wird eine hohe Mischungshomogenität der einzelnen Mischungskomponenten erreicht; gleichzeitig aber auch eine gute Rieselfähigkeit des Materials sichergestellt, da die einzelnen Granalien bei der Aufbereitung nicht miteinander verkleben und die Wirkung des Bindemittels, die für den Aufbau der Grünstandsfestigkeit verantwortlich ist, erst durch den anschließenden Verdichtungsprozeß einsetzt beziehungsweise aktiviert wird.

In seiner allgemeinsten Ausführungsform ist das erfindungsgemäße Verfahren durch folgende Schritte gekennzeichnet:

- Aufsprühen eines niedrigviskosen organischen Binders auf eine Grobfraktion der feuerfesten Komponente mit einer Korngröße größer 0,5 mm, wobei die feuerfeste Grobfraktion während des Aufsprühens in Bewegung gehalten wird,
- Aufsprühen oder Aufstreuen einer feuerfesten Feinfraktion in einer Korngröße kleiner 0,5 mm auf die zuvor oder in-situ gebildeten Granalien,
- Entnahme der so hergestellten Granalien und Verpressen zu Formkörpern sowie
- anschließendes Aushärtenlassen des organischen Binders, Tempern und/oder Brennen.

Verschiedene Merkmale sind für den erfindungsgemäßen Erfolg verantwortlich. Zunächst ist die Unterteilung des feuerfesten Matrixmaterials in eine Grob- und Feinfraktion zu nennen. Die Grobfraktion übernimmt dabei später im Formteil die Funktion eines "Stützkorns", während die Feinfraktion Zwickel zwischen den größeren Teilchen ausfüllt und zusammen mit den übrigen, aufgesprühten Mischungsbestandteilen die Herstellung gepreßter feuerfester Formteile mit bereits hoher Grünstandsfestigkeit ermöglicht. Besonders wichtig ist aber auch das Merkmal, daß die Feinfraktion nicht einfach mechanisch untergemischt wird, sondern - wie der organische Binder - auf die Grobfraktion aufgesprüht oder auf diese aufgestreut wird. Hierdurch wird die beschriebene Panierung erreicht, also eine hohe Oberflächenbedeckung der Grobfraktion beziehungsweise daraus gebildeter Granalien. Dabei hat sich herausgestellt, daß sich bereits mit geringen Harzmengen aufgrund der Sprühtechnik eine nahezu vollständige Oberflächenbedeckung des feuerfesten Matrixmaterials erreichen läßt und damit eine hervorragende Bindung der Teilchen untereinander, insbesondere nach dem Preßvorgang.

Aber auch die übrigen Feinkomponenten, zu denen neben dem Harz auch weitere kohlenstoffhaltige Stoffe wie Graphit, Ruß oder Petrolkoks gehören, bewirken in gleicher Weise gegenüber bekannten Aufbereitungsverfahren eine deutlich verbesserte Reaktionsfähigkeit und Bindefähigkeit der Teilchen untereinander. Vor allem aber wird durch das Aufsprühen eine extrem homogene Verteilung, unter Umständen in mehreren Schichten, erreicht, so daß auch nach dem Preßvorgang ein extrem homogenes Gefüge erreicht wird.

Das Gefüge ist aber nicht nur homogener, sondern insbesondere im Matrixbereich wird auch eine festere Bindung erreicht, wodurch das Raumgewicht und damit die Korrosions- und Erosionsbeständigkeit der fertigen Produkte verbessert wird. In gleicher Weise wird auch für den Fall, daß die Produkte gebrannt werden, eine sehr intensive Versinterung mit den sich daraus ergebenen Vorteilen erreicht.

Das Einbringen der Feinfraktionen kann auf verschiedene Art und Weise erfolgen. Bevorzugt ist ein Aufsprühen oder Aufstreuen in einem Wirbelbett, in dem die feuerfeste Grobfraktion homogen verwirbelt wird, wobei durch den Zusatz des organischen Binders eine in-situ-Granulierung erfolgt. In einer alternativen Ausführungsform wird vorgeschlagen, die Feinkomponente auf einem Granulierteller zuzugeben. In jedem Fall ist aber das feuerfeste Grobkorn stets in Bewegung, so daß eine vollständige Oberflächenbedeckung mit dem organischen Binder und damit eine Agglomerierung einzelner Teilchen zu Granalien erfolgen kann.

Die vorzugsweise danach aufgesprühten oder aufgestreuten weiteren feuerfesten Bestandteile kleben dann auf der zuvor aufgebrachten Binderschicht beziehungsweise füllen Zwickel in den gebildeten Granalien aus. In gleicher Weise wird auch die weitere kohlenstoffhaltige Komponente, die zum Beispiel als Flockengraphit eingebracht wird, auf der zuvor gebildeten Oberfläche angelagert, und zwar wiederum in homogener Verteilung.

Die feuerfeste Feinfraktion beziehungsweise die weitere kohlenstoffhaltige Komponente wird vorzugsweise zuvor mit Alkohol oder Wasser aufbereitet und als flüssige Suspension eingesprüht.

Das erfindungsgemäße Verfahren eignet sich zur Herstellung feuerfester Formkörper aus unterschiedlichsten feuerfesten Materialien. So kann die feuerfeste Grobkomponente zum Beispiel aus $Al_2O_3$, $ZrO_2$, $SiO_2$, Zirkonmullit, $TiO_2$, $Cr_2O_3$ und/oder SiC bestehen.

Die feuerfeste Feinkomponente kann Bestandteile an $Al_2O_3$, $ZrO_2$, $TiO_2$, $Cr_2O_3$, Zirkonmullit, verschiedenen Carbiden, Nitriden oder Boriden, SiAlONen und/oder Metallen wie Cr oder Si aufweisen.

Der organische Binder ist vorzugsweise ein Harz wie Phenol-Resolharz, Phenol -Novolakharz , Furanharz und/oder Epoxidharz.

Besonders hohe Dichten werden erzielt unter Verwendung einer feuerfesten Feinfraktion mit einer maximalen Korngröße von 0,1 mm und insbesondere, wenn diese zumindest einen erheblichen Anteil in mikronisierter Form aufweist. Hierunter werden Teilchen mit einer Korngröße unter 0,01 mm verstanden. Dieser Anteil, der offensichtlich ebenfalls eine Art Binderfunktion im Zusammenhang mit einer Oberflächenbeschichtung übernimmt, sollte innerhalb der Feinfraktion mindestens 30, vorzugsweise mindestens 50 Gew.-% ausmachen.

Hierdurch wird - wie oben bereits ausgeführt - eine erhöhte Grenzflächenaktivität der Teilchen erreicht, die sich insbesondere beim Brand in einem verbesserten Sinterungsverhalten äußert.

Nach einer vorteilhaften Ausführungsform wird vorgeschlagen, neben dem genannten organischen Bindemittel ein chemisches Bindemittel, zum Beispiel eine organisch modifizierte Phosphorsäure ebenfalls auf die zuvor gebildeten Granalien aufzusprühen. Durch die wiederum hervorragende homogene Verteilung dieses Bindemittels im Matrixmaterial wird erreicht, daß bereits bei einer Temperung der Formkörper eine chemische Bindung sich ausbildet, die den Formkörpern eine so hohe Festigkeit verleiht, daß auf einen anschließenden Brand verzichtet werden kann.

Neben dem Aufbau chemischer Bindungsbrücken zwischen den einzelnen Teilchen wirkt vor allem das zwischen den Grob- und Feinanteilen ausgebildete Kohlenstoffgerüst positiv im Sinne einer gewissen "Flexibilität" des Gefüges beim Verpressen. Hierdurch werden zwei Effekte gleichzeitig erzielt. Neben einer hohen Festigkeit führt die Gefügeflexibilität zu günstigen Eigenschaften der Formkörper in Hinblick auf ihre Temperaturwechselbeständigkeit.

Auch die eingangs angesprochene Lagenbildung wird auf diese Weise verhindert.

Selbstverständlich ist es möglich, die feuerfeste Feinfraktion gemeinsam mit der weiteren kohlenstoffhaltigen Komponente und/oder dem organischen Bindemittel einzubringen. Für eine homogene Verteilung ist es jedoch vorteilhaft, die Ausgangssubstanzen dann vorzumischen und so aufzubereiten, daß die Mischung anschließend leicht versprüht werden kann. Aus diesem Grund wird auch die Verwendung von Harzen mit niedriger Viskosität (zum Beispiel 0,6 bis 1 Pa.s; 600 bis 1.000 cP) vorgeschlagen.

Wird die Feinkomponente als Alkohol- oder Wassersuspension aufgesprüht, verdampfen die flüssigen Bestandteile anschließend entweder direkt oder während der Temperung.

Der konkrete Versatz (Auswahl der feuerfesten Materialien, Mengenanteile der Grob- und Feinfraktion, Auswahl des organischen und/oder chemischen Binders sowie der weiteren kohlenstoffhaltigen Komponente etc.) wird im Einzelfall von den geforderten Werkstoffeigenschaften sowie den stahlwerksspezifischen Forderungen abhängen.

So kann es vorteilhaft sein, einen bestimmten Anteil an Si-Metall zuzugeben, das in Anwesenheit von Kohlenstoff beim Brand zu einer festigkeiterhöhenden Bildung von SiC führt.

Weiterhin kann es vorteilhaft sein, einen Zusatz wie $Si_3N_4$ zuzugeben. Durch das Freiwerden des Stickstoffes bei höheren Temperaturen bildet sich in den Poren und Kapillaren ein Dampfdruck aus, der bei der späteren Anwendung infiltrationshemmend wirkt. Auch diese Zusätze, die unter den Begriff "feuerfeste Feinfraktion" subsumiert werden, werden wiederum vorzugsweise in Gelform auf die feuerfeste Grobfraktion beziehungsweise die gebildeten Granalien aufgesprüht.

Die Erfindung wird nachstehend in einem Beispiel näher erläutert.

Der Versatz weist folgende Komponenten auf:

| Komponente | Kornfraktion (mm) | Mengenanteil in Gew.-%. |
|---|---|---|
| 1. Tabular Tonerde | 0,5 bis 1,2 | 30 bis 60 |
| 2. Zirkondioxid | 0,5 bis 1,0 | 10 bis 20 |
| 3. Zirkonmullit | kleiner 0,1 | 10 bis 20 |
| 4. Edelkorund | kleiner 0,01 | 10 bis 20 |
| 5. Flockengraphit | kleiner 0,01 | 5 bis 10 |
| 6. Phenolharz | als Gel | 3 bis 8 |

Die Summe der Mischungskomponenten soll dabei stets 100 Gew.-% betragen.

Zunächst werden die Komponenten 1 und 2 vorgemischt. Anschließend wird die Mischung in eine Wirbelschichtkammer eingegeben und dort verwirbelt. Danach wird das niedrigviskose Phenolharz auf die Grobfraktion aufgesprüht. Die Oberflächen der Grobfraktion werden vollständig und homogen benetzt. Gleichzeitig findet eine Agglomeration einzelner Teilchen der Grobfraktion zu Granalien statt. Die ebenfalls vorgemischten Komponenten 3, 4 und 5 werden gemeinsam mit Alkohol zu einer Suspension aufbereitet und anschließend ebenfalls in den Wirbelschichtreaktor eingesprüht. Die Oberflächen der gebildeten Granalien werden wiederum vollständig und homogen mit einer weiteren Schicht benetzt.

Anschließend wird das Granulat entnommen und bei einem Druck von 100N/mm² verpreßt. Es ergibt sich ein Frischraumgewicht von 2,8 g/cm³.

Eine Preßlagenbildung wurde nicht beobachtet.

Die Formkörper wurden anschließend bei 400° C getempert und schließlich bei 1.550° C unter reduzierenden Bedingungen gebrannt.

Sie zeichnen sich durch ein homogenes, feinteiliges, dichtes Gefüge, geringe Korrosions- und Erosionsanfälligkeit sowie gute Temperaturwechselbeständigkeit aus.

Durch eine Pechimprägnierung kann eine weitere Infiltrationshemmung erreicht werden.

Die Verwendung eines chemischen Binders neben dem genannten organischen Binder ermöglicht es, auf einen separaten Brand zu verzichten. Bereits eine Temperung bei etwa 180° C reicht aus, eine chemische Bindung zu erzielen, die den Produkten eine ausreichende Festigkeit verleiht. Durch die Kombination mit dem organischen Bindemittel können trotzdem die gewünschten Eigenschaften des Formteiles auch ohne kostenintensive thermische Nachbehandlung erzielt werden.

**Patentansprüche**

1. Verfahren zur Herstellung von feuerfesten, kohlenstoffgebundenen, keramischen Formkörpern mit folgenden Schritten:

1.1 Aufspritzen eines niedrigviskosen organischen Binders auf eine Grobfraktion der feuerfesten Komponente mit einer Korngröße größer 0,5 mm, wobei die feuerfeste Grobfraktion während des Aufsprühens in Bewegung gehalten wird,

1.2 Aufsprühen oder Aufstreuen einer feuerfesten Feinfraktion mit einer Korngröße kleiner 0,5 mm auf die zuvor oder in-situ gebildeten Granalien,

1.3 Entnahme der so hergestellten Granalien und Verpressen zu Formkörpern sowie

1.4 anschließendes Aushärtenlassen des organischen Bindemittels, Tempern und/oder Brennen.

2. Verfahren nach Anspruch 1, wobei die Grob- und/oder Feinfraktion vor dem Einsatz vorgemischt worden ist.

3. Verfahren nach Anspruch 1 oder 2, wobei eine weitere kohlenstoffhaltige Komponente, insbesondere in Form von pulverförmigem Graphit, Ruß oder Petrolkoks vor, nach oder gemeinsam mit der feuerfesten Feinkomponente auf die zuvor oder in-situ gebildeten Granalien aufgesprüht oder aufgestreut wird.

4. Verfahren nach einem der Ansprüche 1 bis 3, wobei im Anschluß an das Aufsprühen der Feinkomponente und/oder der weiteren kohlenstoffhaltigen Komponente ein weiterer Anteil des organischen Binders und/oder ein chemischer Binder auf die Granalien aufgesprüht wird.

5. Verfahren nach einem der Ansprüche 1 bis 4, wobei die verschiedenen Komponenten in einem Wirbelbett auf die feuerfeste Grobfraktion aufgesprüht oder aufgestreut werden.

6. Verfahren nach einem der Ansprüche 1 bis 4, wobei das Aufsprühen oder Aufstreuen der verschiedenen Feinkomponenten auf einem Granulierteller durchgeführt wird.

7. Verfahren nach einem der Ansprüche 1 bis 6, wobei die feuerfeste Feinfraktion und/oder die weitere kohlenstoffhaltige Komponente in einer Alkohol- oder Wassersuspension aufgesprüht wird.

8. Verfahren nach einem der Ansprüche 1 bis 7, wobei als feuerfeste Grobfraktion ein Material auf Basis $Al_2O_3$, $ZrO_2$, $SiO_2$, Zirkonmullit, $TiO_2$, $Cr_2O_3$, SiC und/oder rekristallisiertes SiC eingesetzt wird.

9. Verfahren nach einem der Ansprüche 1 bis 8, wobei als feuerfeste Feinkomponente ein Material auf der Basis $Al_2O_3$, $ZrO_2$, $TiO_2$, $Cr2O3$' Zirkonmullit, Carbiden, insbesondere SiC und/oder rekristallisiertes SiC, Nitriden, Boriden, SiAlONen und/oder Metallen wie Cr oder Si eingesetzt wird.

10. Verfahren nach einem der Ansprüche 1 bis 9, wobei die feuerfeste Feinfraktion zumindest teilweise in mikronisierter Form mit einer Korngröße kleiner 0,01 mm eingesetzt wird.

11. Verfahren nach einem der Ansprüche 1 bis 10, wobei als organischer Binder ein Harz, insbesondere ein Phenol-Resolharz, Phenol-Novolakharz, Furanharz und/oder Epoxidharz eingesetzt wird.

12. Verfahren nach einem der Ansprüche 1 bis 11, wobei der organische Binder in einer Menge bis zu 10 Gew.-%, bezogen auf die Gesamtmischung, eingesetzt wird.

13. Verfahren nach einem der Ansprüche 4 bis 12, wobei als chemischer Binder ein Phosphatbinder, insbesondere eine organisch modifizierte Phosphorsäure eingesetzt wird.

14. Verfahren nach einem der Ansprüche 4 bis 13, wobei der chemische Binder in einer Menge bis zu 3 Gew.-%, bezogen auf die Gesamtmischung, eingesetzt wird.

## Claims

1. Process for producing refractory, carbon-bonded ceramic moldings, comprising the following steps:
   1.1. spraying of a low-viscosity organic binder onto a coarse fraction of the refractory component having a particle size larger than 0.5 mm, while maintaining the coarse refractory fraction in motion during the spraying,
   1.2. spraying or strewing a fine refractory fraction with a particle size smaller than 0.5 mm onto the granules formed previously or in situ,
   1.3. removal of the granules thus produced and pressing into moldings, as well as
   1.4. subsequent curing of the organic binder, tempering and/or firing.

2. Process in accordance with claim 1, wherein the coarse and/or fine fractions are premixed prior to use.

3. Process in accordance with claim 1 or 2, wherein a further, carbon-containing component, especially in the form of powdered graphite, carbon black, or petroleum coke, is sprayed or strewn onto the granules

formed previously or <u>in situ</u> before, after or together with the fine refractory component.

**4.** Process in accordance with one of the claims 1 through 3, wherein another portion of the organic binder and/or a chemical binder are sprayed onto the granules subsequent to the spraying on of the fine component and/or the further carbon-containing component.

**5.** Process in accordance with one of the claims 1 through 4, wherein the different components are sprayed or strewn onto the coarse refractory fraction in a fluidized bed.

**6.** Process in accordance with one of the claims 1 through 4, wherein the spraying or strewing of the different fine components is carried out on a granulating plate.

**7.** Process in accordance with one of the claims 1 through 6, wherein the fine refractory fraction and/or the other carbon-containing component are sprayed on in the form of a suspension in alcohol or water.

**8.** Process in accordance with one of the claims 1 through 7, wherein a material based on $Al_2O_3$, $ZrO_2$, $SiO_2$ zircon mullite, $TiO_2$, $Cr_2O_3$, SiC, and/or recrystallized SiC is used as the coarse refractory fraction.

**9.** Process in accordance with one of the claims 1 through 8, wherein a material based on $Al_2O_3$, $ZrO_2$, $TiO_2$, $Cr_2O_3$, zircon mullite, carbides, especially SiC and/or recrystallized SiC, nitrides, borides, SiAlON compounds, and/or metals, such as Cr or Si, are used as the fine refractory component.

**10.** Process in accordance with one of the claims 1 through 9, wherein the fine refractory fraction is used at least partially in the micronized form with a particle size of less than 0.01 mm.

**11.** Process in accordance with one of the claims 1 through 10, wherein a resin, especially a phenol-resol resin, phenol-novolak resin, furan resin, and/or epoxy resin is used as the organic binder.

**12.** Process in accordance with one of the claims 1 through 11, wherein the organic binder is used in an amount of up to 10 wt.% relative to the total mixture.

**13.** Process in accordance with one of the claims 4 through 12, wherein a phosphate binder, especially an organically modified phosphoric acid, is used as the chemical binder.

**14.** Process in accordance with one of the claims 4 through 13, wherein the chemical binder is used in an amount of up to 3 Wt.% relative to the total mixture.


## Revendications

**1.** Procédé de fabrication de corps façonnés en céramiques réfractaires, à liaison carbone, comportant les étapes suivantes :
1.1. Application par pulvérisation d'un liant organique à faible viscosité, sur une fraction grossière des composants réfractaires dont la granulométrie est supérieure à 0,5mm, la fraction grossière réfractaire étant maintenue en mouvement pendant l'aspersion,
1.2. aspersion ou épandage d'une fraction fine réfractaire d'une granulométrie inférieure à 0,5mm sur les grenailles préparées auparavant ou in-situ,
1.3. prélèvement des grenailles ainsi fabriquées et compression pour former des corps façonnés, ainsi qu'ensuite.
1.4. durcissement du liant organique, étuvage et/ou calcination.

**2.** Procédé selon la revendication 1, caractérisé en ce que la fraction grossière et/ou fine a été prémélangée avant mise en oeuvre.

**3.** Procédé selon la revendication 1 ou 2, dans lequel un autre composant contenant du carbone, en particulier sous forme de graphite pulvérulent, suie ou coke de pétrole, a été aspergé ou épandu avant, après ou conjointement au composant fin réfractaire, sur les grenailles préparées auparavant ou in-situ.

**4.** Procédé selon l'une des revendications 1 à 3, dans lequel après l'aspersion du composant fin et/ou de l'autre composant à teneur en carbone, une autre partie du liant organique et/ou un liant chimique est aspergé sur les grenailles.

5. Procédé selon l'une des revendications 1 à 4, dans lequel les différents composant: sont aspergés ou épandus sur la fraction grossière réfractaire dans un lit fluidisé.

6. Procédé selon l'une des revendications 1 à 4, dans lequel l'aspersion ou l'épandage des différents composants fins est effectué sur un plateau de granulation.

7. Procédé selon l'une des revendications 1 à 6, dans lequel la fraction fine réfractaire et/ou l'autre composant à teneur en carbone est aspergé dans une suspension dans l'alcool ou l'eau.

8. Procédé selon l'une quelconque des revendications 1 à 7, dans lequel la fraction grossière réfractaire utilisée est un matériau à base de $Al_2O_3$, $ZrO_2$, $SiO_2$, mullite de zircone, $TiO_2$, $Cr_2O_3$, SiC et/ou SiC recristallisé.

9. Procédé selon l'une des revendications 1 à 8, dans lequel la fraction fine réfractaire utilisée est un matériau à base de $Al_2O_3$, $ZrO_2$, $TiO_2$, $Cr_2O_3$, mullite de zircone, carbures, en particulier SiC et/ou SiC recristallisé, nitrures, borures, Silicium-Aluminium-Oxy-nitrures et/ou métaux tels que Cr et Si.

10. Procédé selon l'une des revendications 1 à 9, dans lequel la fraction fine réfractaire est mise en oeuvre au moins partiellement sous forme micronisée avec une granulométrie inférieure à 0,01 mm.

11. Procédé selon l'une des revendications 1 à 10, dans lequel l'on utilise comme liant organique une résine, en particulier une résine phénol-résol, une résine phénol-novolac, une résine furane et/ou une résine époxy.

12. Procédé selon l'une des revendications 1 à 11, dans lequel le liant organique est utilisé en une quantité allant jusqu'à 10% en poids, rapporté à la totalité du mélange.

13. Procédé selon l'une des revendications 4 à 12, dans lequel on utilise comme liant chimique un liant phosphate, en particulier un acide phosphorique modifié organiquement.

14. Procédé selon l'une des revendications 4 à 13, dans lequel le liant chimique est utilisé en une quantité allant jusqu'à 3% en poids, rapporté à la totalité du mélange.